# EUROPEAN PATENT SPECIFICATION

(11) **EP 3 325 385 B1**
(45) Date of publication and mention of the grant of the patent: **25.09.2024**
(21) Application number: 16741510.8
(22) Date of filing: 13.07.2016
(51) Int. Cl.: B65G 47/71, B65G 1/04, B65G 1/137, B65G 47/53, B65G 47/57, B65G 1/06

(54) **SHUTTLE WAVE SEQUENCING CONVEYOR**
SHUTTLE-WELLEN-SEQUENZIERUNGSFÖRDERER
CONVOYEUR DE SÉQUENCEMENT À ONDE DE NAVETTE

(30) Priority: 17.07.2015 US 201562193920 P; 22.09.2015 US 201562221674 P; 17.06.2016 US 201615185389
(43) Date of publication of application: 30.05.2018
(73) Proprietor: Intelligrated Headquarters, LLC, Mason, OH 45040 (US)
(72) Inventor: ARNOLD, Christopher C., Loveland, OH 45140 (US); HUFF, David, Batavia, OH 45103 (US); STEINKAMP, Mark D., Mason, OH 45040 (US); PLOTHOW, Steven, Taylorsville, UT 84123 (US)
(74) Representative: Haseltine Lake Kempner LLP
(86) International application number: PCT/US2016/041999
(87) International publication number: WO 2017/015011

(56) References cited:
- EP-A1- 0 373 060
- EP-A1- 1 010 647
- JP-A- 2003 246 443
- JP-A- S5 912 001
- JP-A- S61 140 402
- US-A- 2 591 971
- US-A1- 2005 186 053
- US-A1- 2009 074 545
- US-A1- 2010 300 048
- US-A1- 2010 300 842
- US-A1- 2013 031 876

## Description

### FIELD OF THE INVENTION

The present invention relates to a material handling system.

### BACKGROUND

AS/RS systems are designed for automated storage and retrieval of parts and items in manufacturing, distribution, retail, wholesale and institutions. They first originated in the 1960s, initially focusing on heavy pallet loads but with the evolution of the technology the handled loads have become smaller. The systems operate under computerized control, maintaining an inventory of stored items. Retrieval of items is accomplished by specifying the item type and quantity to be retrieved. The computer determines where in the storage area the item can be retrieved from and schedules the retrieval. It directs the proper automated storage and retrieval machine (SRM) to the location where the item is stored and directs the machine to deposit the item at a location where it is to be picked up. A system of conveyors and or automated guided vehicles, such as shuttles, are sometimes part of the AS/RS system. These take loads into and out of the storage area and move them to the manufacturing floor, loading docks, palletizer, or order fulfillment station. To store items, the pallet or tray is placed at an input station for the system, the information for inventory is entered into a computer terminal and ihe AS/RS system moves the load to the storage area, determines a suitable location for the item, and stores the load. As items are stored into or retrieved from the racks, the computer updates its inventory accordingly.

The benefits of an AS/RS system include reduced labor for transporting items into and out of inventory, reduced inventory levels, more accurate tracking of inventory, and space savings. Items are often stored more densely than in systems where items are stored and retrieved manually. The trend towards Just In Time production often requires sub-pallet level availability of production inputs, mixed pallet outputs, or e-commerce order fulfillment, and AS/RS is a much faster way of organizing the storage of smaller stems next to production lines.

One AS/RS technology is known as shuttle technology, in this technology the horizontal movement is made by independent shuttles each operating on one level of the rack while a lift at a fixed position within the rack is responsible for the vertical movement. By using two separate machines for these two axes, the shuttle technology is able to provide higher throughput rates than stacker cranes and multi-level shuttles. Storage and Retrieval Machines pick up or drop offloads to the rest of the supporting transportation system at specific stations, where inbound and outbound loads are precisely positioned for proper handling.

Often the vertical lift can be the limiting item with regard to overall throughput of the AS/RS system. Each vertical lift is also a significant portion of the cost of overall AS/RS solution. Adding additional vertical lifts can make the resulting solution too expensive and with an insufficient return on investment to implement.

US 2010/300842 A1 discloses a material handling system according to the preamble of claim 1. In particular, the document discloses a vertical storage rack system includes a vertically moveable transport conveyor and one or more vertical feed conveyors that vertically extend between the various rack levels so that items can be loaded and/or unloaded at any of the levels without the need for the vertically moveable transport to return to a loading/unloading level. This vertical rack system can be used to load and unload items from the racks as well as rearrange items in the racks.

JP S61 140402 A discloses that an entering cargo carried by an entering conveyer is set at an entering port. A moving rack is stopped in such a manner that a delivering cargo on the moving rack gets to a designated position for delivering in parallel to the entering cargo. The delivering cargo is taken out onto a delivering conveyer by a pulling device, the entering cargo is transferred onto the moving rack by a push-out device, and the moving rack is again driven.

### SUMMARY

The present invention is defined by the appended claims.

### BRIEF DESCRIPTION OF THE DRAWINGS

The features, nature, and advantages of the present invention will become more apparent from the detailed description set forth below when taken in conjunction with the drawings in which like reference characters identify correspondingly throughout and wherein:
FIG. 1A illustrates a depiction of an isometric view of an automated storage and retrieval system (AS/RS) solution that includes a wave conveyor;
FIG. 1B illustrates a depiction of a front detail view of the AS/RS and wave conveyor of FIG. 1A;
FIG. 1C illustrates a depiction of a top isometric view of the wave conveyor of FIG. 1A;

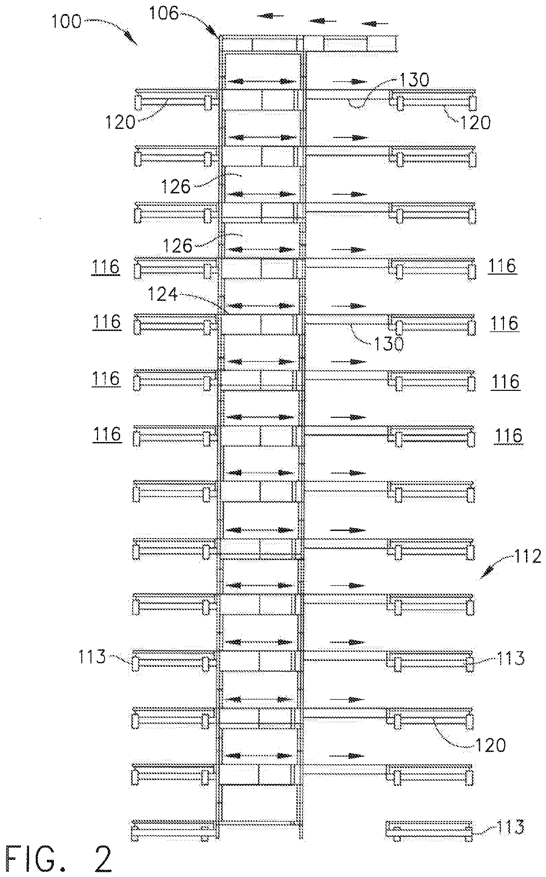

FIG. 2 illustrates a diagram of a front view of the wave conveyor of FIG. 1A;

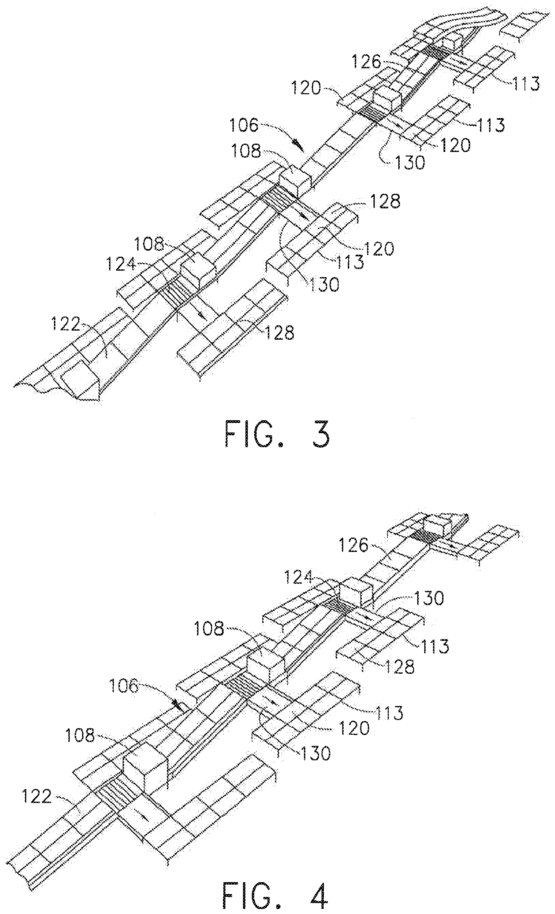

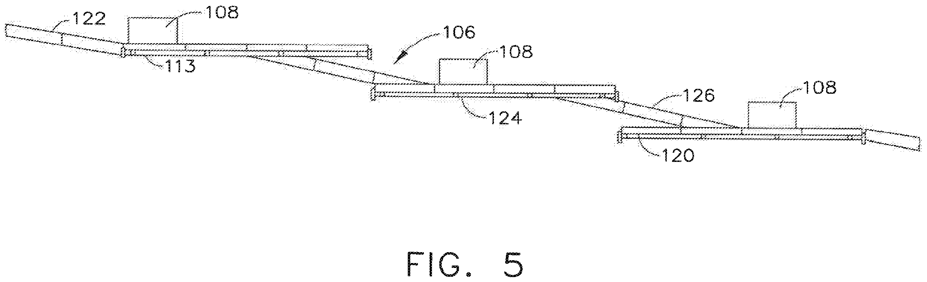

FIG. 3 illustrates a diagram of an isometric view of the wave conveyor of FIG. 1A;
FIG. 4 illustrates a diagram of an isometric view of the wave conveyor of FIG. 1A;
FIG. S illustrates a diagram of a side view of the wave conveyor of FIG. 1A;

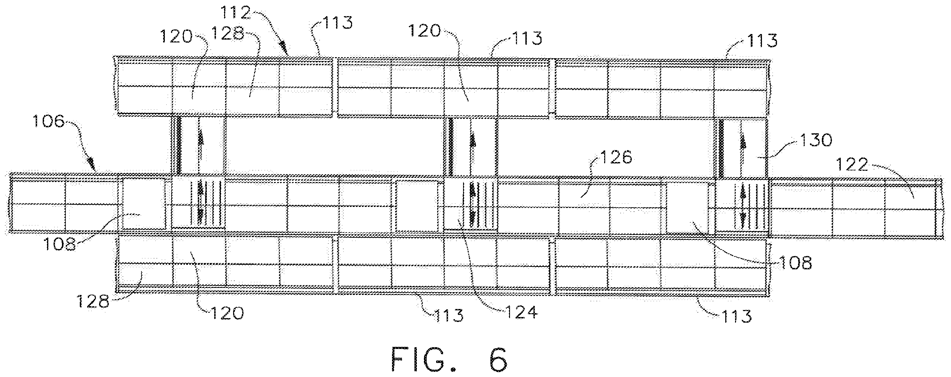

FIG. 6 illustrates a diagram of a top view of the wave conveyor of FIG. 1A;

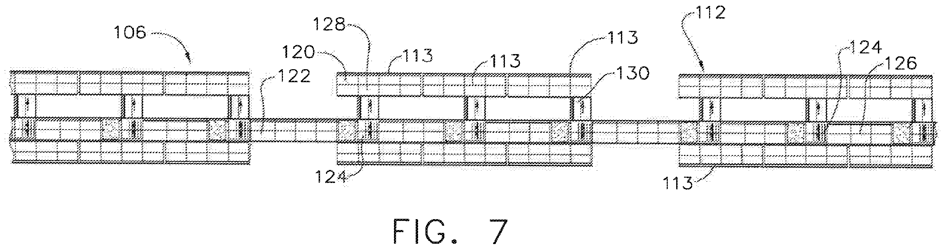

FIG. 7 illustrates a diagram of a top view of the wave conveyor of FIG. 1A;
FIG. 8A illustrates a diagram of a top view of a dual stacked wave conveyors;
FIG. 8B illustrates a diagram of a side view of the dual stacked wave conveyors of FIG. 8A;
FIG. 9 illustrates a diagram of a tiered AS/RS for a high throughput wave conveyor;
FIG. 10 illustrates a flow diagram of a method of sequencing articles from an AS/RS, not according to the present invention;
FIG. 11 illustrates a block diagram of an exemplary computing environment for executing the method of sequencing articles from an AS/RS;
FIG. 12 illustrates a depiction of an isometric view of a laptop computer for executing instructions to perform sequencing articles from an AS/RS;
FIG. 13 illustrates a depiction of an isometric view of a server information handling system for executing instructions to perform sequencing articles from an AS/RS;
FIGs. 14A - 14D illustrate an isometric view, side view, top view, and front view respectively of a reduced-length wave conveyor folded back at its midpoint;
FIGs. 15A - 15B illustrate top sequenced views of a P&D station of an example AS/RS that is flanked by left and right buffer location;
**FIG. 16A** illustrates a top diagrammatic view of another example AS/RS having additional intermediate buffer locations being used to sequence articles, according to one or more embodiments;
**FIG. 16B** illustrates a top diagrammatic view of the AS/RS of **FIG. 16A** having one buffer receiving replenishment articles, according to one or more embodiments;
**FIG. 17** illustrates an isometric view of an example AS/RS that includes a hinged extender conveyors that transfer product to a wave conveyor, according to one or more embodiments; and
**FIG**. **18** illustrates a top diagrammatic view of an additional example AS/RS having a wave conveyor that interfaces to two independent in and out P&D stations at each level to simultaneously support both put into storage away and sequencing to an order fulfillment station, according to one or more embodiments.

### DETAILED DESCRIPTION

"The Wave" is a way to bring product out of a shuttle system instead of using a vertical lift in order to achieve a higher throughput as well as other advantages. A wave conveyor in combination with an automated storage and retrieval system (AS/RS) such as a shuttle system can prove sequencing across one or more pallets or separate orders at the same time. Typically when sequencing with a reciprocating lift, throughput is significantly reduced. With the wave, simulation has shown that there is almost no reduction in rate of sequenced articles. The wave conveyor can provide service for articles such as pallets, cases, cartons or totes a single packaged or unpackaged product.

One wave conveyor can service multiple aisles of a shuttle rack system. Alternatively or in addition, one wave can service a single aisle. A wave conveyor can be used to just take things away or to just bring things in with the reverse direction serviced by another wave conveyor or by a vertical lift. Alternatively or in addition, a wave conveyor can be used selectively to bring in product or to take away on the same line at different times respectively. To achieve even higher throughput, two wave conveyors can be stacked with offset pickup and deposit (P&D) stations on a particular aisle.

P&D stations can be provided by embedding P&D conveyors within the storage rack down the length of the aisle. Independent buffer and transfer positions provide full P&D functionality. The transfer and buffering capability cars be equivalent to what is provided for vertical lifts. Number of buffer locations provided can be from 1 to "N" and can be independent of the wave. Each P&D transfer level connects to an inclined conveyor. Each level of the AS/RS can be independent. Inclined or declined conveyor can provide a reliable trunk line for all inbound and outbound toads with high load capacity. Inbound and outbound product flows can be serviced by separate conveyor levels. Faults in one area do not impact operation for the rest of the system.

In coordination with control of shuttles of the shuttle rack system, a wave conveyor can sequence the product on the way out in order to efficiently supply a paletizer or an order fulfillment system such as a goods-to-operation (GTO) station. For example, a shuttle assigned to a level can be responsible for pulling in the sequence assigned to that level, which can include buffering locations at that level. The wave conveyor combines the inputs from each level into the desired sequence by controlling the release of product onto a trunk line of the wave conveyor. For example, a warehouse management system (WMS) can (a) assign release windows for each level; (b) hold product on the trunk line until the desired load is available; and (c) only release when all lower priorities have gone past. Sequencing by the WMS does not have to be strict.

Various aspects are now described with reference to the drawings. In the following description, for purposes of explanation, numerous specific details are set forth in order to provide a thorough understanding of one or more aspects, it may be evident, however, that the various aspects may be practiced without these specific details. In other instances, well-known structures and devices are shown in block diagram form in order to facilitate describing these aspects.

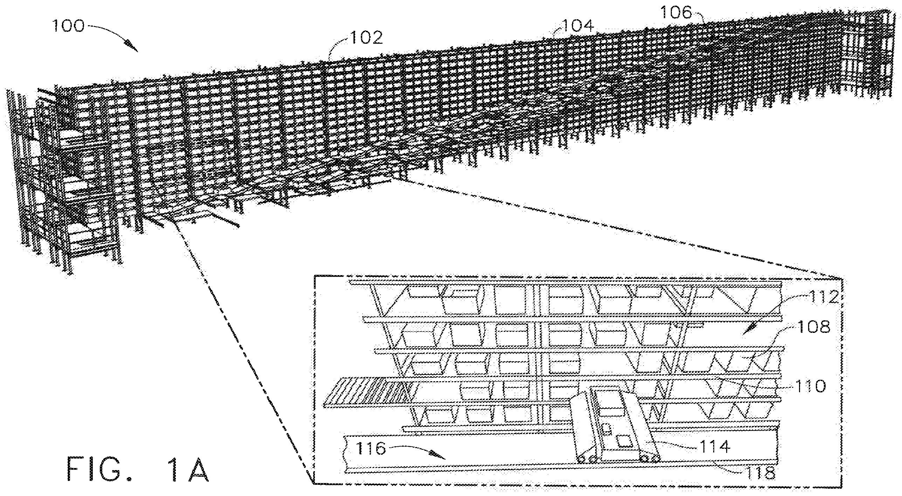

FIGs. 1A - 1B illustrate a material handling system 100 having an automated storage and retrieval system (AS/RS) 102 with at least one storage bay 104 serviced by a wave conveyor 106. Articles 108 such as cartons, totes, cases, pallets, products, etc., are stored on shelves 110 in a rack system 112 of the AS/RS 102. FIG. 1A illustrates a single-level shuttle 114 that services a shelf 110 on one or both sides of an aisle 116 defined by electrified rails 118 attached to the rack system 112. Wave conveyor 106 is separated from the shuttles 114 and receives articles 108 from a Pick Up & Deposit (P&D) station 120 at a juxtaposed position on a shelf 110. More than one shelf along the aisie 116 can be serviced by a multi-level shuttle (not shown) or a single-level shuttle 114 that has a means for roaming to another level (e.g., vertical lift, inclined rails, etc.).

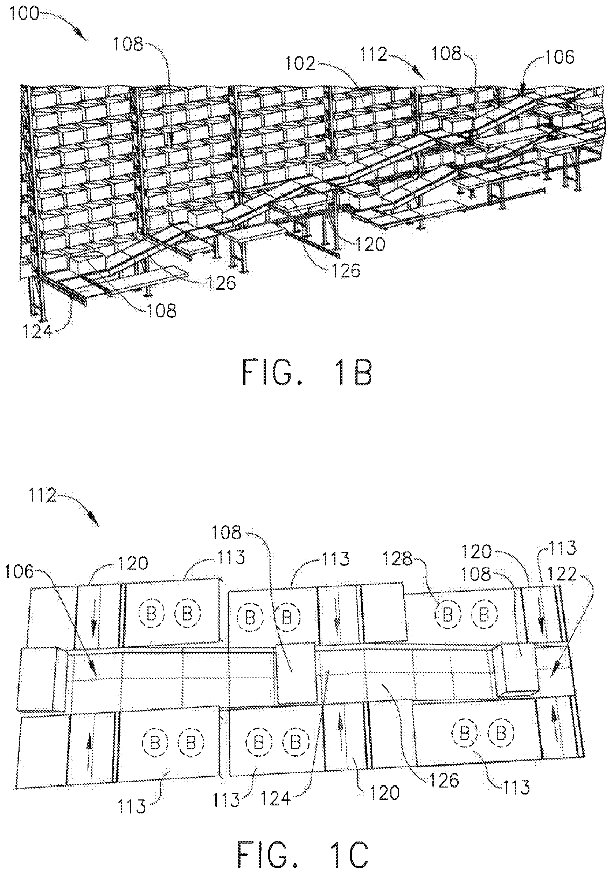

FIGs. 1B - 1C illustrate that the wave conveyor 106 can run up an incline or down a decline to discharge respectively at the top or bottom. For clarity, the wave conveyor 106 is assumed to run down such that all loads move downhill. Loads join a main trunk line 122 on a flat transfer section 124 between decline sections 126. Transfer section 124 can be located at different locations with respect to the storage bay 104 as the trunk line 122 travels down. Conveyor decline angle and length can be varied to accommodate different bay sizes. P&D stations 120 transfer articles 108 onto and/or off of the trunk line 122 at ajuxtaposed flat transfer section 124. FIG. 1C illustrates that the P&D station 120 on three respective shelves 113 can be flanked with buffer location/s 128 to enable staging of additional articles 108 for sequencing onto the trunk line 122 or for receiving from the trunk line 122 until taken away for storage. FIGs. 1C further illustrates that this particular configuration can have a series of three different transfer locations with respect to the storage bay, then a long section of conveyor at a different decline angle where the pattern then repeats.

FIGs, 2-7 illustrate that a transfer section 124 can abut the storage shelf 113, or it can be connected with an extender conveyor 130. An extender conveyor 130 can accommodate space for maintenance catwalk/access. Product (articles 108) is typically accumulated on the trunk line 122. For sequencing, loads (products, articles 108) can be stopped upstream of the transfer section 124 (if required) to ensure sequence integrity,

Two shuttle vehicle aisles can provide storage on either side of the wave conveyor. Storage can be either single or multi-deep. The wave conveyor travels down the middle between the two aisles. In this case, there are 2 trunk lines, one for inbound and one for outbound stacked on top of each other.

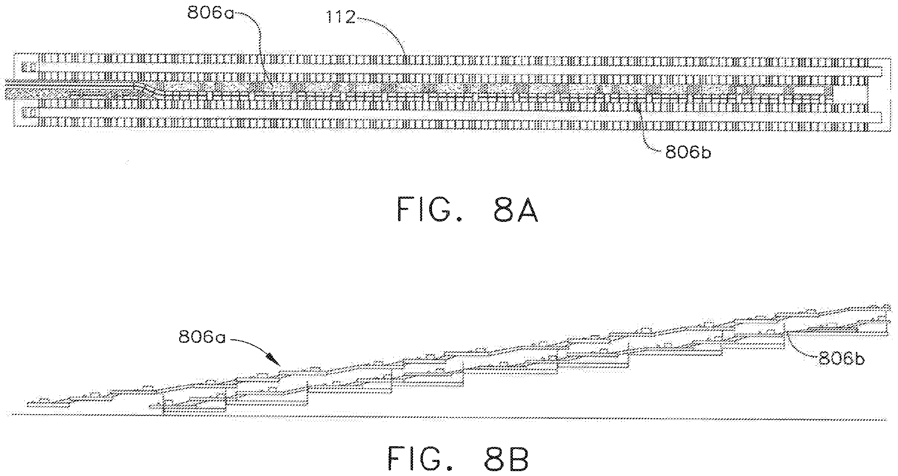

FIGs. 8A - 8B illustrate two stacked wave conveyors 806a, 806b. If two trunk lines are used, they do not have to be stacked, but can be offset from each other. Notice offset of inbound and outbound tie-ins for a specific level to allow for load clearances with stacked conveyors. In a single trunk line configuration, this offset is not required.

Vertical lifts can also be included with the wave conveyor providing a backup or surge capability.

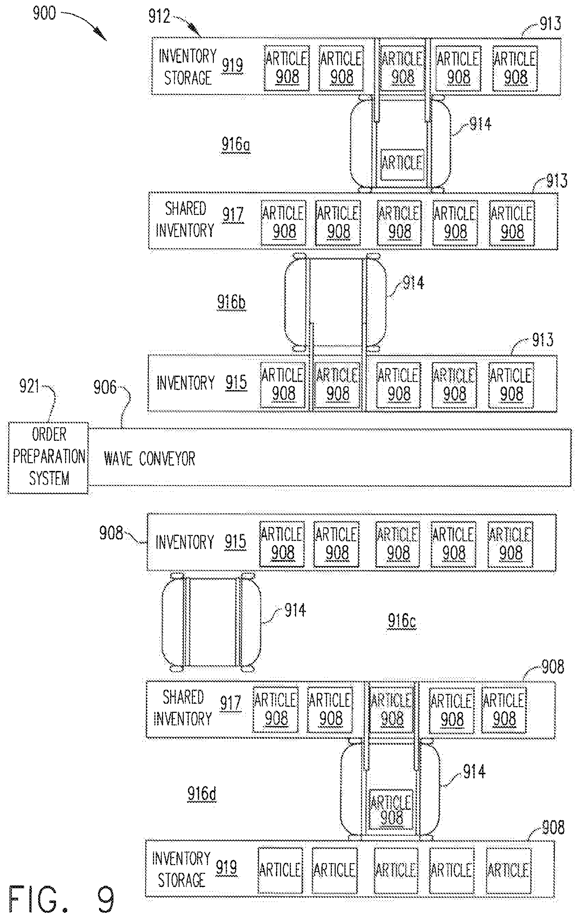

FIG. 9 illustrates an AS/RS 900 that addresses a challenge that shuttle vehicles 914 may be very busy picking the right inventory in the right sequence and delivering it to the wave conveyor 906. For example, to provide for full capacity palletizing, typically a (relatively) large storage base is required (typically long aisles). However, shuttle vehicle availability decreases as aisles 916a - 916d lengthen due to longer travel times. Thus, shuttle vehicles 914 can require significant time managing inventory (e.g., shuffles, replenishment, etc.) versus delivering to inventory locations 915 on a shelf 913 closest to the wave conveyor 906. To increase the number of unique storekeeping units (SKUs) that can be selected, an aisle 916b - 916c closest to the wave conveyor 906 is serviced by a shuttle vehicle 914 that can receive article from another shuttle vehicle 914 in another aisle 916a, 916d, respectively, that is farther away from the wave conveyor 906. For example, the concept can be extended to yet further aisles (not shown). Thereby, slow moving SKUs that are infrequently requested for inclusion in a sequenced flow can be stored deeper into a rack system 912 in inventory storage locations 919 of an AS/RS 900 with fast moving SKUs positioned in closer aisles 916b - 916c for faster throughput by the AS/RS 900. Thus, the concept is to add a second set of shuttle vehicles 914 "behind" the first set with shared inventory locations 917 between. The second set of shuttle vehicles 914 can stock inventory (articles 908) in remote inventory storage locations 919 without burdening the sequenced delivery to the wave conveyor 906. The wave conveyor 906 sequences articles 908 to an order preparation system 921.

The wave conveyor 906 for robotic sequencing can thus provide for fast movers that are inducted into inventory closest to the wave conveyor 906. Slow moving inventory is farther from the wave conveyor 906. Slow moving inventory is passed forward through rack positions. Cases from each level are placed into sequence in the buffer for that level (B1 = Buffer position for level 1). Level release is timed to provide perfect sequence at the end of the conveyor. (L1, L2, L3... are assigned and release at appropriate window).The wave conveyor 906 allows for specific sequencing of loads on the trunk conveyor without degradation of throughput. Applying this to robotic palletizing allows a perfect sequence to be delivered to a robot. Rates of up to 1,800 CPH have been simulated in perfect sequence. The wave can even support multiple orders being filled at the same time by separating during the pallet build operation or separated by conveyor divert to multiple robots or workstations.

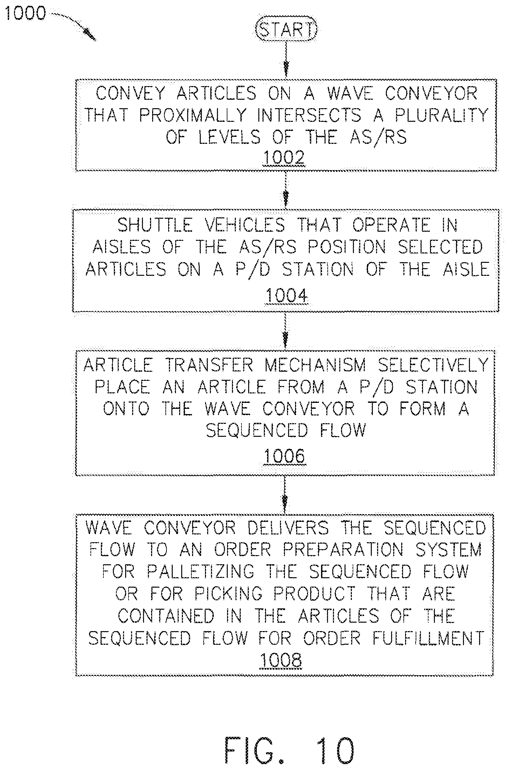

FIG. 10 illustrates a method 1000 of sequencing articles from an AS/RS of a material handling system. The method 1000 includes conveying articles on a wave conveyor that proximally intersects a plurality of levels of the AS/RS (block 1002). The method 1000 includes shuttles that operate in aisles of the AS/RS positioning selected articles on a P/D station of the aisle (block 1004). The method 1000 includes an article transfer mechanism selectively placing an article from a P/D station onto the wave conveyor to form a sequenced flow (block 1006). The method 1000 includes delivering the sequenced flow to an order preparation system for palletizing the sequenced flow or for picking product that are contained in the articles of the sequenced flow for order fulfillment (block 1008). The method 1000 includes replenishing the AS/RS from one of the wave conveyor and another wave conveyor that is offset from the wave conveyor and intersects the levels of the AS/RS.

In the above described flow chart of FIG. 10, one or more of the methods may be embodied in an automated controller that performs a series of functional processes. In some implementations, certain steps of the methods are combined, performed simultaneously or in a different order, or perhaps omitted.

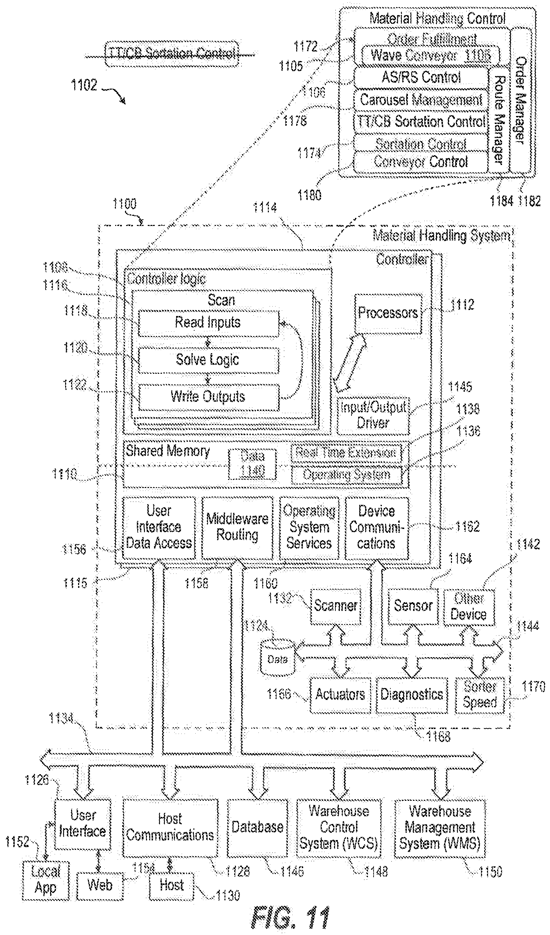

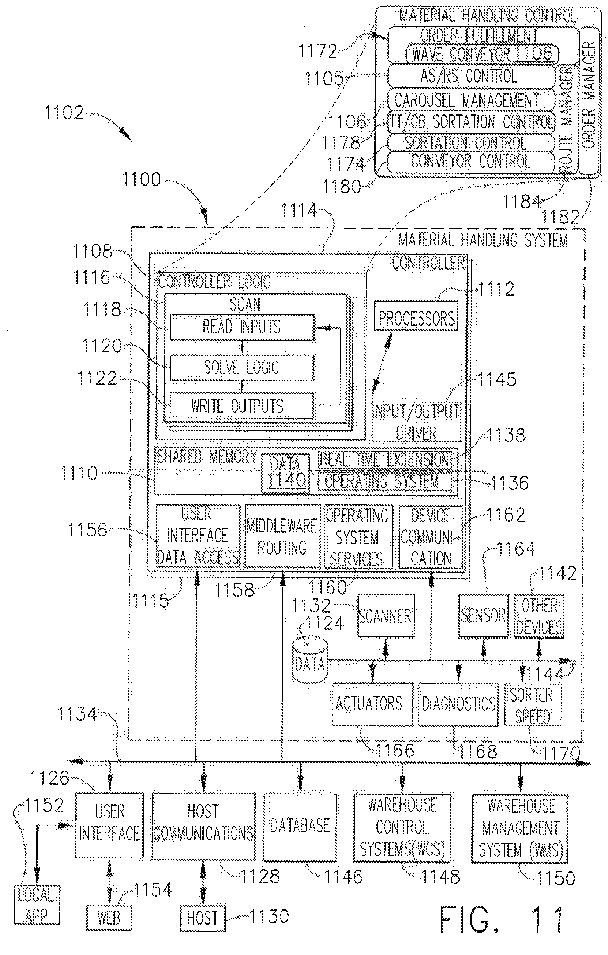

In FIG. 11, an exemplary material handling system 1100 of a distribution center processing architecture 1102 is depicted wherein AS/RS wave control 1104 is implemented within an order fulfillment control 1105 that coordinates with an AS/RS control 1106. Controller logic 1108 stored in computer-readable, shared memory 1110 is executed by processors 1112 in a controller 1114 of the material handling system 1100. One function of the controller logic 1108 can be machine control logic. The controller 1114 can be a primary controller supported by a backup controller 1115 such that maintenance personal could swap cables or connections in the event of a failure without undue service downtime. Alternatively, a supervising system or the self-diagnostics could cause automatic switching between primary and backup in the event of a failure.

Scan logic, or merely a scan **1116,** refers to an implementation within the controller logic **1108** wherein the processors **1112** repeatedly execute a read input component **1118,** a solve logic component **1120,** and a write outputs component **1122.** By performing this sequence on a regular, periodic basis (deterministic), then the machine control logic can count scans to measure time. These three steps can be performed by a programmable logic controller (PLC), a personal computer (PC), a minicontroller, or microcontroller, etc. The solve logic component **1120** can incorporate IF-THEN-ELSE branching logic, motion control, simple to sophisticates, hardlined to configured. Data, used by the solve logic component **1120,** can reside in the computer-readable, shared memory **1110** or a data store device **1124** (e.g., local, remote, cloud-based, etc.). A user interface **1126** can be used to modify the solve logic component **1120** such as by changing values that change the configuration or operation.

As is conventionally understood, the controller logic **1108** can receive binary type inputs (e.g., switches, photo eyes, etc.) and generate binary type outputs (e.g., motor contacts, solenoid valves, lamp actuations, etc.). For example, in such an implementation, the user interface **1126** can entail at least in part push button controls and lamps. More recent developments for controller logic **1108** can include RS232 serial devices with light emitting diode (LED), liquid crystal diode (LCD), cathode ray tube (CRT), etc., screens and keyboards that enable dialog screens and data display along with printers for generating reports. Barcode scanning can detect items processed by the material handling system **1100.** More recently, wired and wireless communication within the material handling system **1100** and distribution center processing architecture **1102** enable more distributed and remotely isolated implementations. For example, such communication architectures may employ bus couplers such a PROFIBUS and ETHERCAT.

The scan **1116** can be one of many control scans to support increased speeds and complexities for portions of the material handling system **1100.** Certain logic is required to be performed during shorter intervals than others and so the scans **1116** can have different periodicities, often selected for convenience to occur as multiples of the shortest duration scan **1116.** Examples include scans **1116** of 1 ms and 2 ms for motion control, 11 ms for a merge subsystem, and 211 ms for general conveyor.

The material handling system **1100** can incorporate host communications **1128** to a host system **1130** using serial ports, Ethernet, file transfer protocol (FTP), Transfer Control Protocol/Internet Protocol (TCP/IP), etc. Thereby, the host system **1130** can make decisions for the material handling system **1100.** For example, a scanner **1132** can see a barcode. The barcode is sent to the host system **1130,** such as via a bridge **1134.** The host system **1130** responds with a destination. In response, the material handling system **1100** causes the item with the barcode to go to that destination. Alternatively, the process can entail receiving a batch or download of destinations mapped to barcodes as part of a lookup table (LUT) for reference by the material handling system **1100.**

The computer-readable shared memory **1110** can allow execution of an operating system (e.g., Windows, LINX, etc.) **1136** to execute with a real time extension **1138.** The real time extension **1138** assures that the machine control logic (controller logic **1108)** gets to execute completely on the time schedule required. Variations in the execution schedule are measured in microseconds. This approach assures the kind of precision required for the machine control while retaining access to the power and flexibility of a general purpose Operating system (e.g., Windows). PLCs, which can also be included for machine control, can operate in their own proprietary environments (hardware and software) and are integrated using communications. Data **1140** from these communications is stored in computer-readable shared memory **1110** for use in control decisions and for display on user interface **1126.** In an exemplary version, the data **1140** is not controlled by the real time extension **1138.** In a similar fashion, other communicating devices **1142** used in the control process (e.g., scales, printers) are connected via a private internal communications bus (e.g., Ethernet) **1144** to the processors **1112.** The controller **1114** can also have internal input/output drivers **1145** to interface using specific communication protocols.

The distribution center processing architecture **1102** can include other systems external to the material handling system **1100** that communicate via the bridge **1134,** such as a database **1146,** a warehouse control system (WCS) **1148,** and a warehouse management system (WMS) **1150.** In addition, the user interface **1126** can facilitate remote or automated interaction via the user interface **1126,** depicted as a local application 1152 and a web application 1154. The controller 1114 can include specific interfaces to support this interaction, such as a user interface data access component 1156 to interact with user interface 1126, middleware routing component 1158 to interface with other external systems. Operating system services 1160 and a device communication component 1162 can also support the communications, such as sensors 1164, actuators 1166, diagnostic systems 1168, and a sorter speed control 1170.

The controller logic 1108 can be functional described as material handling control layers 1172 of software functionality, such as sortation control 1174, that address certain subsystems within a distribution center: order fulfillment 1105, carousel management 1176, tilt tray/cross belt (TT/CB) control 1178, conveyor control 1180, order manager 1182 and route manager 1184.

For example, running average carton length can be used. Then, after a reset, the expected average for the ten minute timer can be used. The same approach can be used for the one (1) minute average for recirculation. Alternatively or in addition, inter-slug gap can be considered in the calculation.

In accordance with various aspects of the disclosure, an element, or any portion of an element, or any combination of elements may be implemented with a "processing system" that includes one or more physical devices comprising processors. Non-limiting examples of processors include microprocessors, microcontrollers, digital signal processors (DSPs), field, programmable gate arrays (FPGAs), programmable logic devices (PLDs), programmable logic controllers (PLCs), state machines, gated logic, discrete hardware circuits, and other suitable hardware configured to perform the various functionality described throughout this disclosure. One or more processors in the processing system may execute instructions. A processing system that executes instructions to effect a result is a processing system which is configured to perform tasks causing the result, such as by providing instructions to one or more components of the processing system which would cause those components to perform acts which, either on their own or in combination with other acts performed by other components of the processing system would cause the result. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on a computer-readable medium. The computer-readable medium may be a non-transitory computer-readable medium. Computer-readable medium includes, by way of example, a magnetic storage device (e.g., hard disk, floppy disk, magnetic strip), an optical disk (e.g., compact disk (CD), digital versatile disk (DVD)), a smart card, a flash memory device (e.g., card, stick, key drive), random access memory (FLAM), read only memory (ROM), programmable ROM (PROM), erasable PROM (EPROM), electrically erasable PROM (EEPROM), a register, a removable disk, and any other suitable medium for storing software and/or instructions that may be accessed and read by a computer. The computer-readable medium may be resident in the processing system, external to the processing system, or distributed across multiple entities including the processing system. The computer-readable medium may be embodied in a computer-program product. By way of example, a computer-program product may include a computer-readable medium in packaging materials. Those skilled in the art will recognize how best to implement the described functionality presented throughout this disclosure depending on the particular application and the overall design constraints imposed on the overall system.

A computing device 1200 will typically include a processor 1201 coupled to volatile memory 1202 and a large capacity nonvolatile memory, such as a disk drive 1205 of Flash memory. The computing device 1200 may also include a floppy disc drive 1213 and a compact disc (CD) drive **1214** coupled to the processor **1201.** The computing device **1200** may also include a number of connector ports **1215** coupled to the processor **1201** for establishing data connections or receiving external memory devices, such as a USB or FireWire^{™} connector sockets, or other network connection circuits for establishing network interface connections from the processor **1201** to a network or bus, such as a local area network coupled to other computers and servers, the Internet, the public switched telephone network, and/or a cellular data network. The computing device **1200** may also include the trackball or touch pad **1217,** keyboard **1218,** and display **1219** all coupled to the processor **1201.**

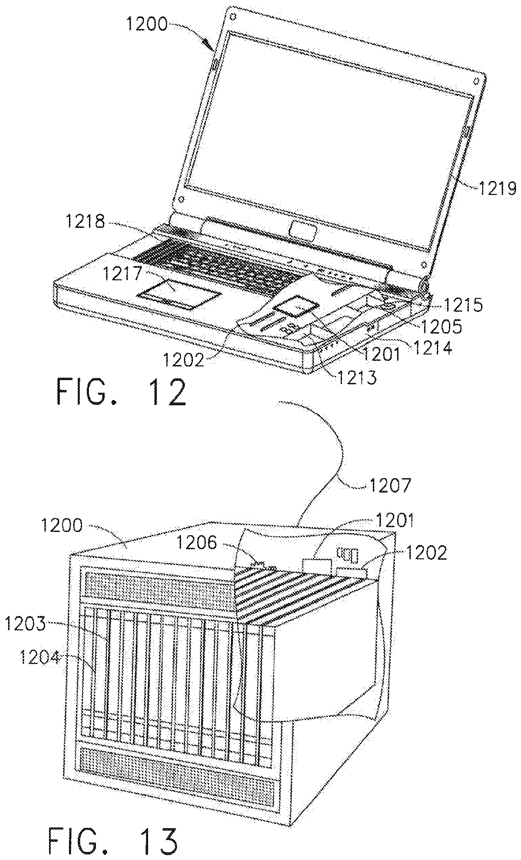

The various embodiments may also be implemented on any of a variety of commercially available server devices, such as the server **1300** illustrated in **FIG. 13****.** Such a server **1300** typically includes a processor **1301** coupled to volatile memory **1302** and a large capacity nonvolatile memory, such as a disk drive **1303.** The server **1300** may also include a floppy disc drive, compact disc (CD) or DVD disc drive **1304** coupled to the processor **1301.** The server **1300** may also include network access ports **1306** coupled to the processor **1301** for establishing network interface connections with a network **1307,** such as a local area network coupled to other computers and servers, the Internet, the public switched telephone network, and/or a cellular data network.

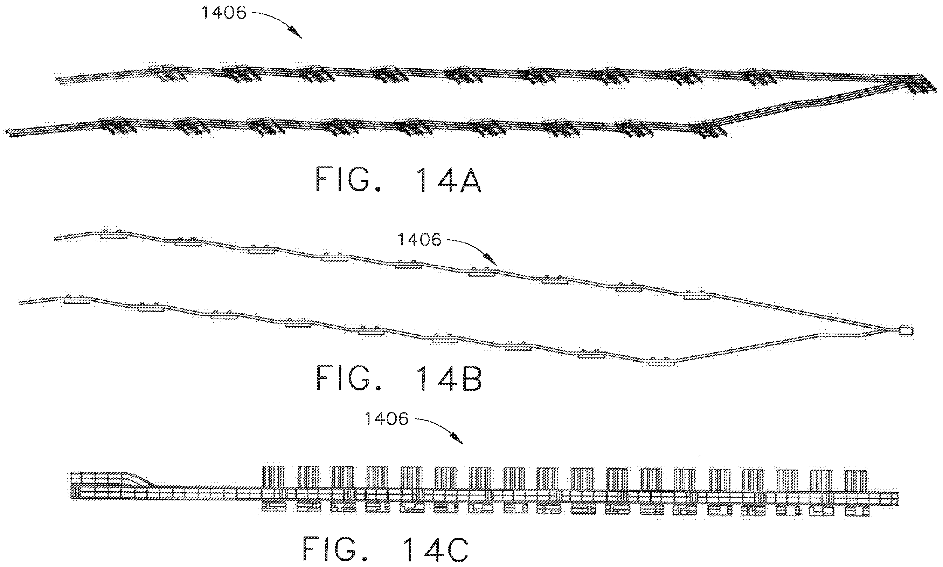

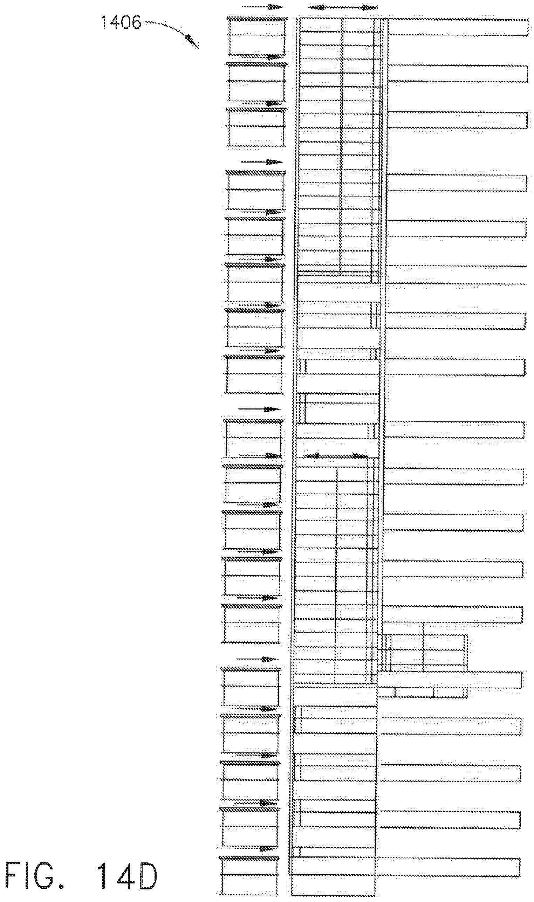

**FIGs. 14A - 14D** illustrate a reduced length wave conveyor **1406** that is folded back at its midpoint in order to reduce by half its floor space longitudinal dimension for a given number of levels serviced. For clarity, only one fold back is depicted; however, more can be incorporated to service additional vertical levels.

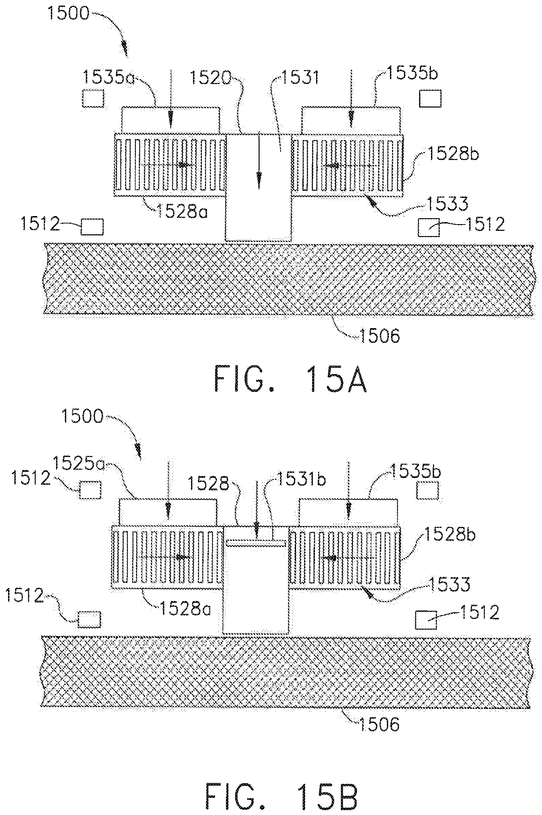

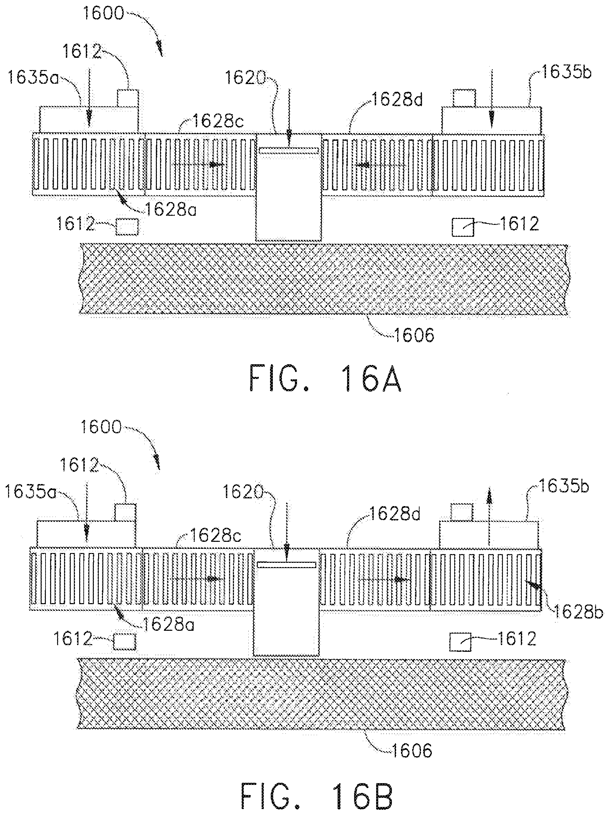

**FIGs. 15A** - **15B** illustrate a P&D station **1520** of an AS/RS **1500** that is flanked by left and right buffer locations **1528a** - **1528b** within a rack **1512.** **FIG. 15A** illustrates an article transfer mechanism **1531a** at the P&D station **1520** such as a right angle transfer with the buffer locations **1528a** - **1528b** including motor driven rollers **1533.** **FIG. 15B** illustrates an article transfer mechanism **1531b** at the P&D station **1520** such as pusher. **FIGs. 15A** - **15B** include shuttle drops **1535a** - **1535b** onto the left and right buffer locations **1528a** - **1528b,** respectively. Articles are received on shuttle drops shuttle drops **1535a** - **1535b.** **FIG. 16A** illustrates an AS/RS **1600** having left and right intermediate buffer locations **1628c** - **1628d** inserted for additional buffering capacity that are flanked respectively by left and right buffer locations **1628a** - **1628b** within a rack **1612.** **FIG. 16B** illustrates the AS/RS **1600** having a right portion reversed in direction for replenishment with the left side continuing to sequence out for order fulfillment. Articles are received at the shuttle drops 1635a - 1635b.

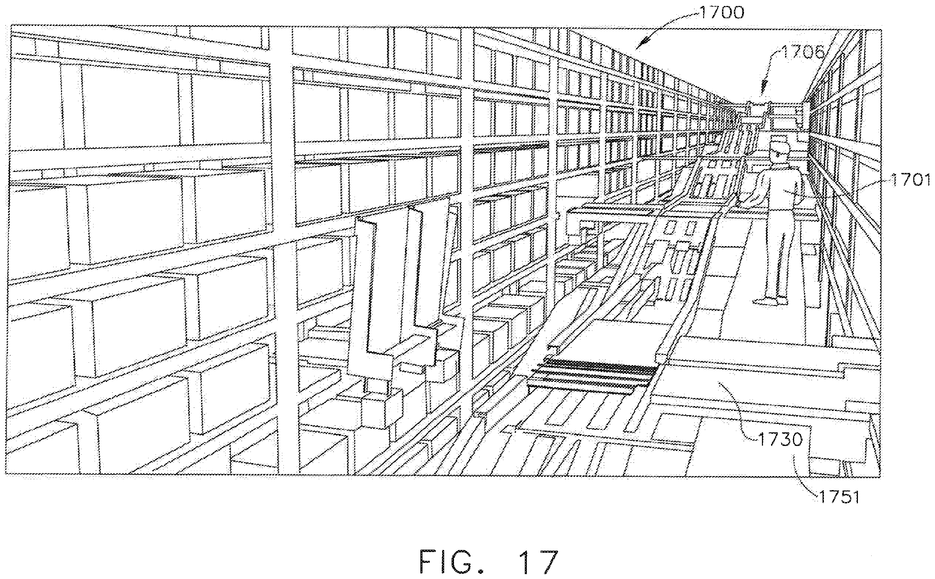

FIG. 17 illustrates an AS/RS 1700 that includes a wave conveyor 1706. Access for a human operator 1701 is provided by hinged extender conveyors 1730 that can be flipped up to use an inclined catwalk 1751.

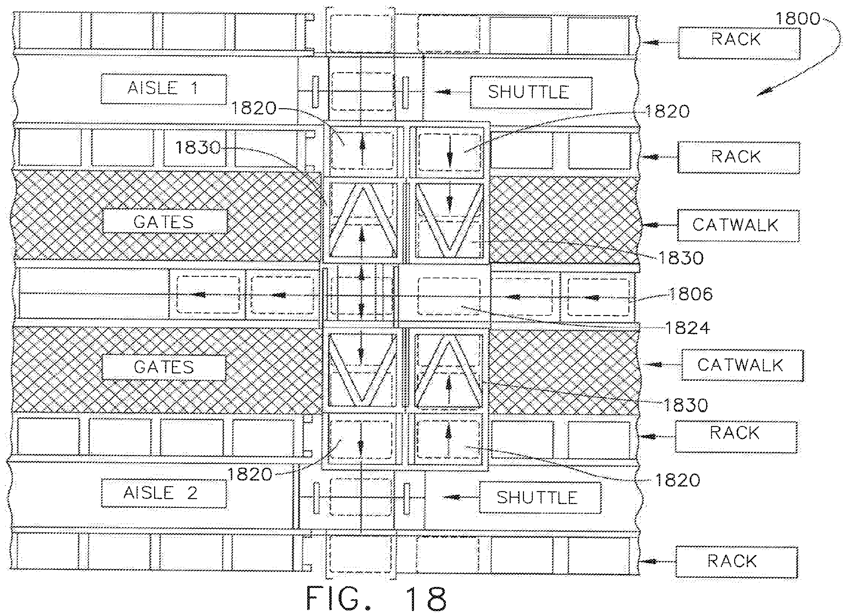

FIG. 18 illustrates an AS/RS 1800 having a wave conveyor 1806 that interfaces to two independent in and out P&D stations 1820 at each level to simultaneously support both put into storage away and sequencing to an order fulfillment station. Each side of the wave conveyor 1806 includes hinged extender conveyors 1830 between flat transfer sections 1824 and the respective P&D stations 1820 that serve as operator gates.

## Claims

1. A material handling system (100) comprising:
an automated storage and retrieval system (102) comprising vertically spaced levels storing articles (108) and each level having at least one pickup and deposit station (120) that is horizontally positioned to define a ramped orientation;
a wave conveyor (106) having the ramped orientation to move the articles (108) selectively in at least one flow direction to each of the pickup and deposit stations (120), wherein each pickup and deposit station (120) connects to an inclined conveyor;
an article transfer mechanism (1531) at each pickup and deposit station (120) respectively to move an article (108) in a selected at least one direction between the wave conveyor (106) and the respective pickup and deposit station (120);
**characterized in that**:
the automated storage and retrieval system (102) is a shuttle rack system; and
the material handling system (100) further comprises:
left and right buffer locations (1528a-1528b), wherein a pickup and deposit station (120) is flanked by left and right buffer locations (1528a-1528b) within a rack; and
shuttle drops (1535a-153 5b) on the left and right buffer locations (1528a-1528b), respectively, wherein the articles (108) are received on the shuttle drops (1535a-1535b).

2. The material handling system (100) of claim 1, wherein the article transfer mechanism (1531) comprises at least one right angle transfer conveyor subsystem positioned to transfer an article (108) between the pickup and deposit station (120) and a juxtaposed portion of the wave conveyor (106),

3. The material handling system (100) of claim 1, wherein the automated storage and retrieval system (102) comprises shuttles that move articles (108) in aisles that each include a respective pickup and deposit station (120).

4. The material handling system (100) of claim 1, further comprising a palletizer that palletizes the sequenced flow of selected articles (108) from the wave conveyor (106).

5. The material handling system (100) of claim 1, further comprising an order fulfillment station that selects products contained in the sequenced flow of selected articles (108) from the wave conveyor (106).

6. The material handling system (100) of claim 1, further comprising a vertical lift that performs at least one operation of delivering and taking away articles (108) from each level of the automated storage and retrieval system (102), wherein the wave conveyor (106) provides the other one operation of delivering and taking away articles (108) from each level.

## Patentansprüche

1. Materialhandhabungssystem (100), umfassend:
ein automatisiertes Ein- und Auslagersystem (102), das vertikal beabstandete Ebenen umfasst, welche Artikel (108) einlagern, und wobei jede Ebene mindestens eine Abhol- und Ablagestation (120) aufweist, die horizontal positioniert ist, um eine abgeschrägte Ausrichtung zu definieren;
ein Wellenförderband (106), das die abgeschrägte Ausrichtung aufweist, um die Artikel (108) selektiv in mindestens eine Flussrichtung zu jeder der Abhol- und Ablagestationen (120) zu bewegen, wobei jede Abhol- und Ablagestation (120) mit einem geneigten Förderband verbunden ist;
einen Artikeltransfermechanismus (1531) an jeder jeweiligen Abhol- und Ablagestation (120), um einen Artikel (108) in eine ausgewählte mindestens eine Richtung zwischen dem Wellenförderband (106) und der jeweiligen Abhol- und Ablagestation (120) zu bewegen;
**gekennzeichnet dadurch, dass**:
das automatisierte Ein- und Auslagersystem (102) ein Shuttle-Regal-System ist; und
das Materialhandhabungssystem (100) ferner Folgendes umfasst:
linke und rechte Pufferpositionen (1528a-1528b), wobei eine Abhol- und Ablagestation (120) innerhalb eines Regals von rechten und linken Pufferpositionen (1528a-1528b) flankiert ist; und
Shuttle-Absenkungen (1535a-1535b) an den jeweiligen rechten und linken Pufferpositionen (1528a-1528b), wobei die Artikel (108) auf den Shuttle-Absenkungen (1535a-1535b) aufgenommen werden.

2. Materialhandhabungssystem (100) nach Anspruch 1, wobei der Artikeltransfermechanismus (1531) mindestens ein rechtwinkliges Transferförderband-Untersystem umfasst, das dazu positioniert ist, einen Artikel (108) zwischen der Abhol- und Ablagestation (120) und einem daneben angeordneten Wellenförderband (106) zu transferieren.

3. Materialhandhabungssystem (100) nach Anspruch 1, wobei das automatisierte Ein- und Auslagersystem (102) Shuttles umfasst, die Artikel (108) in Gängen bewegen, von denen jeder eine jeweilige Abhol- und Ablagestation (120) beinhaltet.

4. Materialhandhabungssystem (100) nach Anspruch 1, ferner umfassend eine Palletiermaschine, welche den aufeinander folgenden Fluss ausgewählter Artikeln (108) von dem Wellenförderband (106) palletiert.

5. Materialhandhabungssystem (100) nach Anspruch 1, ferner umfassend eine Auftragserfüllungsstation, welche Produkte auswählt, die in dem aufeinander folgenden Fluss ausgewählter Artikel (108) von dem Wellenförderband (106) enthalten sind.

6. Materialhandhabungssystem (100) nach Anspruch 1, ferner umfassend einen Senkrechtaufzug, der mindestens einen Vorgang des Lieferns und Wegnehmens von Artikeln (108) von jeder Ebene des automatisierten Ein- und Auslagersystems (102) durchführt, wobei das Wellenförderband (106) den anderen Vorgang des Lieferns und Wegnehmens von Artikeln (108) von jeder Ebene bereitstellt.

## Revendications

1. Système de manutention (100) comprenant :
un système automatisé de stockage et de récupération (102) comprenant des niveaux espacés verticalement, stockant des articles (108), et chaque niveau ayant au moins une station d'enlèvement et de dépôt (120) qui est positionnée horizontalement pour définir une orientation en rampe ;
un convoyeur à vagues (106) ayant une orientation en rampe pour déplacer les articles (108) sélectivement dans au moins une direction de flux vers chacune des stations d'enlèvement et de dépôt (120), dans lequel chaque station d'enlèvement et de dépôt (120) se connecte à un convoyeur incliné ;
un mécanisme de transfert (1531) d'articles au niveau de chaque station d'enlèvement et de dépôt (120) respectivement destiné à déplacer un article (108) dans au moins une direction sélectionnée entre le convoyeur à vagues (106) et la station d'enlèvement et de dépôt (120) respective ;
**caractérisé en ce que** :
le système automatisé de stockage et de récupération (102) est un système de rayonnage à navette ; et
le système de manutention (100) comprend en outre :
des emplacements de tampon gauche et droit (1528a-1528b), dans lesquels une station d'enlèvement et de dépôt (120) est flanquée d'emplacements de tampon gauche et droit (1528a-1528b) à l'intérieur d'un rayonnage ; et
des arrivées de navettes (1535a-1535b) sur les emplacements de tampon gauche et droit (1528a-1528b), respectivement, dans lesquelles les articles (108) sont reçus sur les arrivées de navettes (1535a-1535b).

2. Système de manutention (100) selon la revendication 1, dans lequel le mécanisme de transfert (1531) d'articles comprend au moins un sous-système de convoyeur de transfert à angle droit positionné pour transférer un article (108) entre la station d'enlèvement et de dépôt (120) et une partie juxtaposée du convoyeur à vagues (106).

3. Système de manutention (100) selon la revendication 1, dans lequel le système automatisé de stockage et de récupération (102) comprend des navettes qui déplacent des articles (108) dans des allées qui incluent chacune une station d'enlèvement et de dépôt (120) respective.

4. Système de manutention (100) selon la revendication 1, comprenant en outre un palettiseur qui palettise le flux séquentiel d'articles (108) sélectionnés à partir du convoyeur à vagues (106).

5. Système de manutention (100) selon la revendication 1, comprenant en outre une station de traitement des commandes qui sélectionne les produits contenus dans le flux séquentiel d'articles (108) sélectionnés à partir du convoyeur à vagues (106).

6. Système de manutention (100) selon la revendication 1, comprenant en outre un élévateur vertical qui effectue au moins une opération de livraison et de retrait d'articles (108) à chaque niveau du système automatisé de stockage et de récupération (102), dans lequel le convoyeur à vagues (106) effectue l'autre opération de livraison et de retrait d'articles (108) à chaque niveau.
